# EUROPÄISCHE PATENTSCHRIFT

(11) **EP 0 491 074 B1**
(45) Veröffentlichungstag und Bekanntmachung des Hinweises auf die Patenterteilung: **26.04.1995**
(21) Anmeldenummer: 90124677.7
(22) Anmeldetag: 19.12.1990
(51) Int. Cl.: H04N 5/63

(54) **Bildröhren-Sichtgerät**
Picture tube display apparatus
Dispositif d'affichage à tube image

(43) Veröffentlichungstag der Anmeldung: 24.06.1992
(73) Patentinhaber: VOGT electronic Aktiengesellschaft, D-94128 Obernzell (DE)
(72) Erfinder: Hartmann, Uwe, Ing. grad., W-8391 Untergriesbach (DE); Mai, Udo Ing. grad., W-8391 Untergriesbach (DE)
(74) Vertreter: Hieke, Kurt

(56) Entgegenhaltungen:
- EP-A- 0 283 782
- SIEMENS COMPONENTS XXI, Nr. 1, 1986, Seiten 9-13, München, DE; M. HERFURTH:"Active harmonic filtering for line rectifiers of higher output power"
- IEEE 1988 INTERNATIONAL CONFERENCE ON CONSUMER ELECTRONICS, DIGEST OF TECHNICAL PAPERS, Rosemont, Illinois, 8. - 10. Juni 1988, Seiten 196-197, New York, US;G. RILLY et al.: "Power concept for HDTV"
- NEW ELECTRONICS, Band 23, Nr. 1, Januar 1990, Seiten 34-36, Horton Kirby, Kent,GB; D. PEDDER: "Technological advances raise interest in psus"
- IBM TECHNICAL DISCLOSURE BULLETIN, Band 21, Nr. 11, April 1979, Seiten 4341-4342, New York, US; A.N. BRINSON et al.: "Self-regulating CRT deflection system"

## Beschreibung

Die Erfindung bezieht sich auf ein Bildröhren-Sichtgerät gemäß dem Oberbegriff des Patentanspruchs 1.

Eine solche Einrichtung ist aus " Power Concept for HDTV" von G. Rilly et al., International Conference on Consumer Electronics bekannt.

Es muß damit gerechnet werden, daß in Zukunft die maximal zulässigen Oberwellen von "Verbrauchern" auch für Bildröhren-Sichtgeräte, insbesondere Fernsehgeräte und Monitore, mit einer Leistungsaufnahme von unterhalb 170 W festgelegt werden. Oberhalb dieser Leistungsklasse sind sie bereits heute vorgeschrieben (sh. die Norm EN60555).

Um diese Vorschrift zu erfüllen, könnte nach dem Stand der Technik vor dem Schaltnetzteil anstelle des ungeregelten Brückengleichrichters ein Brückengleichrichter mit einem nachgeschalteten sogenannten aktiven Oberwellenfilter z.B. gemäß Druckschrift "Siemens Components" 24/1986, Heft 1, S.9-13, eingesetzt werden. Mit dieser Stufe ließe sich eine sinusförmige Stromaufnahme erzielen. Der Nachteil wäre jedoch eine Verteuerung des Geräts durch das zusätzlich hinzukommende aktive Oberwellenfilter. Gerade bei Produkten wie Fernsehempfängern und Monitoren, die einem harten Preisdruck ausgesetzt sind, sollte angestrebt werden, diese Vorschrift ohne Verteuerung gegenüber den bekannten Geräten zu erfüllen.

Der Erfindung liegt die Aufgabe zugrunde, ein Bildröhren--Sichtgerät gemäß dem Oberbegriff des Patentanspruchs 1 zu schaffen, das ohne Vergrößerung der Anzahl benötigter Leistungsstufen gegenüber den bekannten Geräten dieser Art um die Funktion "sinusförmige Stromaufnahme" erweitert ist.

Die vorgenannte Aufgabe wird durch die Merkmale des Patentanspruchs 1 gelöst.

Bei dem erfindungsgemäßen Gerät wird nicht zusätzlich zu einem Schaltnetzteil üblicher Bauart sondern anstelle von diesem ein Schaltnetzteil in Form eines aktiven, eine sinusförmige Stromaufnahme gewährleistenden Oberwellenfilters, das mit Netztrennung ausgeführt ist, eingesetzt. Oberwellenfilter haben gegenüber den bei Bildröhren-Sichtgeräten bisher benutzten herkömmlichen Schaltnetzteilen den Nachteil, daß auf ihren Ausgangsgleichspannungen eine Restbrummspannung vorhanden ist. Der Erfindung liegt die Erkenntnis zugrunde, daß diese verbrummten Ausgangsspannungen jedoch problemlos zum Betreiben der in einem Bildröhren-Sichtgerät benötigten Horizontalendstufe herangezogen werden können, wenn erfindungsgemäß in Kombination mit dem Oberwellenfilter eine selbstregelnde Horizontalendstufe, z.B. die bekannte "Wesselschaltung" (DE-Z "Funkschau" Jg. 1977, S. 835 bis 840) oder die bekannte "Single Switch Power Pack"-Schaltung (Philips Report No. EJV 8502, S. R4 - R7 u. R40 - R42)
verwendet wird, daß mit diesen verbrummten Ausgangsspannungen außerdem alle nicht brumm-empfindlichen Schaltungsteile des Geräts, insbesondere auch vorhandene Tonendstufen, betrieben werden können, ohne die selbstregelnde Horizontalendstufe zu stören, und daß aus der selbstregelnden Horizontalendstufe alle im Gerät vorhandenen brummempfindlichen Schaltungsteile ihre Gleichstromversorgung erhalten können. Mit den verbrummten Ausgangsspannungen lassen sich mittels Längsreglern ohne große Verlustleistung auch der IR-Vorverstärker und der Bedienteilprozessor für den Stand-by-Betrieb und den Normalbetrieb versorgen.

Selbstregelnde Horizontalendstufen bzw. Zeilenendstufen wurden in der Vergangenheit wenig und im wesentlichen nur für Fernsehgeräte der unteren Leistungsklasse (90° Ablenkwinkel) verwendet. Die Gründe hierfür sind folgende:
- Bei den bekannten Geräten mit selbstregelnder Horizontalendstufe wurde mangels einer verfügbaren anderweitigen Gleichstromversorgung auch die Tonendstufe aus der Horizontalendstufe versorgt. Wegen der Rückwirkung auf das Bild ist diese Versorgung für die Tonendstufe jedoch problematisch und nur bei niedrigem Leistungsbedarf überhaupt anwendbar.
- Eine Netztrennung ist schwierig.
- Die Kollektorspannung am Regeltransistor ist sehr hoch.
- Der Regelbereich ist gering.
- Stand-by-Betrieb ist problematisch.

Alle diese Nachteile entfallen mit der neuartigen erfindungsgemäßen Konzeption, die mit der gleichen Anzahl von Leistungsstufen wie bei den bekannten Bildröhren-Sichtgeräten auskommt:

Eine Rückwirkung auf das Bild durch die Audio-Stufen ist unmöglich, weil die Versorgung nicht ausgangsseitig aus der Horizontalendstufe sondern davor direkt aus dem aktiven Oberweilenfilter erfolgt. Die NF-Ausgangsleistung ist demzufolge nicht begrenzt.

Ebenfalls im aktiven Oberwellenfilter findet die Netztrennung statt. Für die Zeilenendstufe können somit normale Standard-Diodensplit-Transformatoren ohne Netztrennung verwendet werden.

Die Kollektorspannung am Regeltransistor der selbstregelnden Horizontalendstufe hat normale Werte, weil die vom Oberwellenfilter zur Verfügung zu stellende Betriebsspannung so ausgelegt werden kann, daß sie nur geringfügig über dem benötigten Systemspannungswert liegt. Durch diese Dimensionierung kann die Kollektorspannung klein gehalten und zudem die Speicherspule der selbstregelenden Horizontalendstufe extrem klein ausgeführt werden.

Da bei dieser Dimensionierung nur eine kleine Brummspannung ausgeregelt werden muß, ist der systembedingt kleine Regelbereich einer selbstregelnden Zeilenendstufe völlig ausreichend.

Weil im Stand-by-Betrieb nur das aktive Oberwellenfilter zur Versorgung des Bedienteilprozessors arbeiten muß und die Horizontalendstufe abgeschaltet werden kann, entsteht keine Hochspannung. Der Stand-by-Betrieb ist mit niedriger Leistungsaufnahme ohne Probleme realisierbar. Es ist sowohl ein kontinuierlicher als auch ein Paket- bzw. Burst-Betrieb mit diesem Konzept möglich, so daß jede gewünschte Leistung im Stand-by-Betrieb zur Verfügung gestellt werden kann. Es entstehen hierbei zwar Oberwellen im Netzstrom, doch sind diese wegen der sehr geringen Leistungsaufnahme gering und damit erlaubt.

Das erfindungsgemäße Gerät wird, wie üblich, mit dem Hauptschalter eingeschaltet. Mittels Fernbedienung, IR-Vorverstärker und Bedienteilprozessor wird zwischen Stand-by- oder Normalbetrieb umgeschaltet. Hierzu kann der Bedienteilprozessor das Ansteuersignal für die selbstregelnde Horizontalendstufe steuern.

Die Unteransprüche haben bevorzugte Ausgestaltungen des Bildröhren-Sichtgeräts gemäß Anspruch 1 zum Gegenstand.

Die Erfindung wird anhand der Zeichnung an einem Ausführungsbeispiel nachstehend noch näher erläutert.

In der Zeichnung zeigt:
- Bild 1: ein Blockschaltbild des neuen Stromversorgungskonzepts gemäß der Erfindung, wobei von dem Bildröhren-Sichtgerät nur die im Zusammenhang mit der Erfindung interessierenden Schaltungsteile wiedergegeben sind,
- Bild 2: Das Schaltbild einer beispielsweise Ausführung eines bei der Schaltung nach Bild 1 verwendbaren, für sich bekannten aktiven Oberwellenfilters mit sinusförmiger Stromaufnahme aus dem Netz und mit integrierter Netztrennung, und
- Bild 3: das Schaltbild einer beispielsweisen Ausführung einer bei der erfindungsgemäßen Schaltung nach Bild 1 verwendbaren, für sich bekannten selbstregelnden Zeilenendstufe, die sich für das erfindungsgemäße Konzept besonders gut eignet.

Für das neue Stromversorgungskonzept gemäß der Erfindung ist es belanglos, wie der Signalteil des Bildröhren-Sichtgeräts gestaltet ist. Er kann in herkömmlicher analoger Technik oder in digitaler Technik ausgeführt sein.

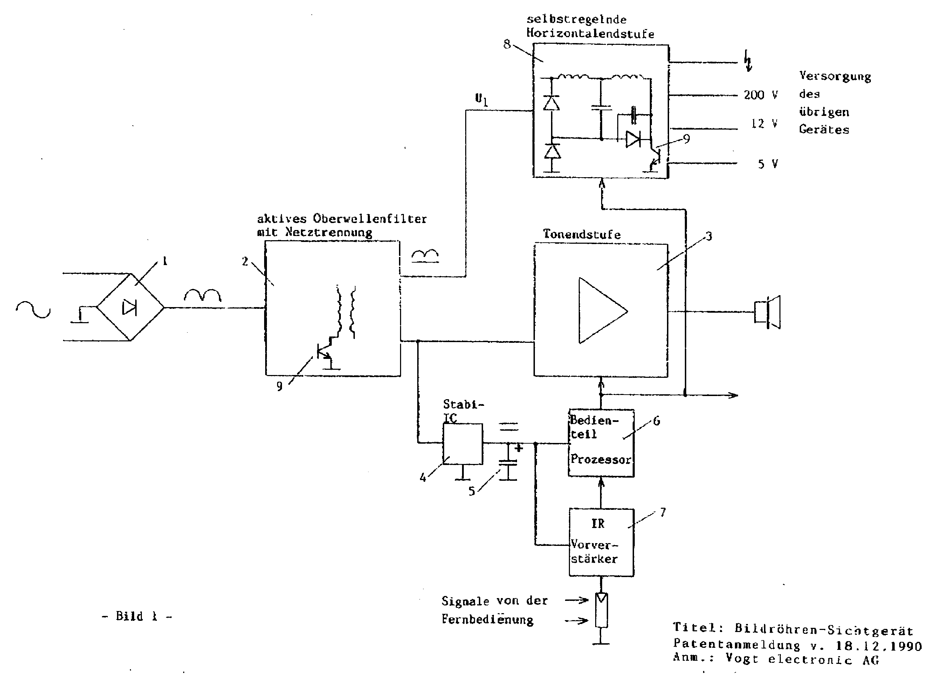

Bild 1 zeigt als Beispiel eine bevorzugte Realisierung der neuartigen Stromversorgung gemäß der Erfindung bei einem Fernsehempfänger.

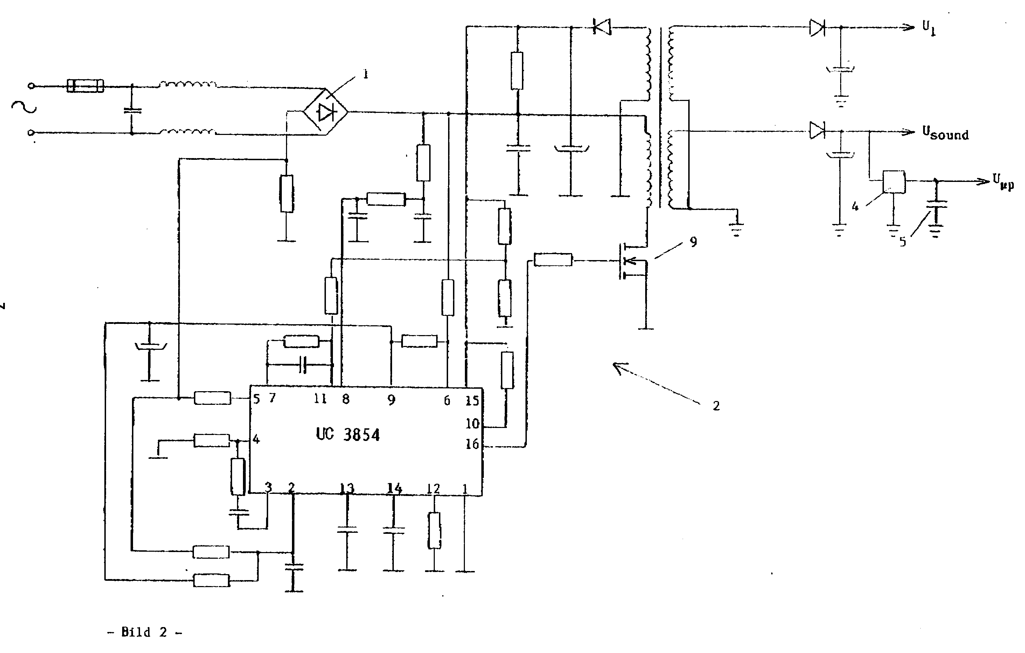

Die Schaltung weist netzseitig einen Brückengleichrichter 1 auf, der ein Schaltnetzteil 2 speist, das als aktives Oberwellenfilter ausgeführt ist. Oberwellenfilter dieser Art sind hinsichtlich des prinzipiellen Aufbaus und der prinzipiellen Wirkungsweise in der Druckschrift "Siemens Components" 24/1986, Heft 1, S.9-13, dargestellt und beschrieben. Von dem in dieser Druckschrift im Detail offenbarten Oberwellenfilter unterscheidet sich das Oberwellenfilter allerdings dadurch, daß zusätzlich noch eine Netztrennstelle eingebaut ist, wie dies im Detail in Bild 2 dargestellt ist.

Die Ausgangsgleichspannung des Oberwellenfilters weist systembedingt eine Restbrummspannung auf. Mit dieser verbrummten Gleichspannung werden die Schaltungsteile, die wie die Tonendstufe 3 eine etwas verbrummte Versorgungsspannung vertragen, direkt versorgt. Vom Ausgang des Oberwellenfilters 2 ist über Stabilisierungs-IC 4 und einen Glättungskondensator 5 auch die Stromversorgung für Schaltungsteile abgezweigt, die zu ihrem Betrieb zwar eine einigermaßen stabilisierte und geglättete Gleichspannung benötigen, aber einen kleinen Leistungsbedarf haben und keine besonders großen Anforderungen an die Brummfreiheit und Stabilisierung der Versorgungsspannung stellen, wie dies beim Bedienteilprozessor 6 und beim IR-Vorverstärker 7 der Fernbedienung der Fall ist.

Aus dem Oberwellenfilter 2 wird des weiteren eine selbstregelnde Horizontal- bzw. Zeilenendstufe 8 gespeist, die infolge ihrer Selbstregelungsfunktion mit der verbrummten Gleichspannung betreibbar ist. Diese Horizontalendstufe 8 erzeugt die hochgradig brummfreie und stabilisierte Gleichspannung, die für die Zeilenablenkung benötigt wird, und sie liefert mit dem benötigten Spannungswert auch die weiteren Versorgungsspannungen für diejenigen Empfängerteile, die an ihre Versorgungsspannung sehr hohe Anforderungen hinsichtlich Brummfreiheit und Stabilität stellen und/oder ggf. auch bei etwas geringeren Anforderungen, einen so hohen Leistungsbedarf haben, daß dieser mit einem einfachen Stabilisierungs-IC nicht bewältigt werden kann.

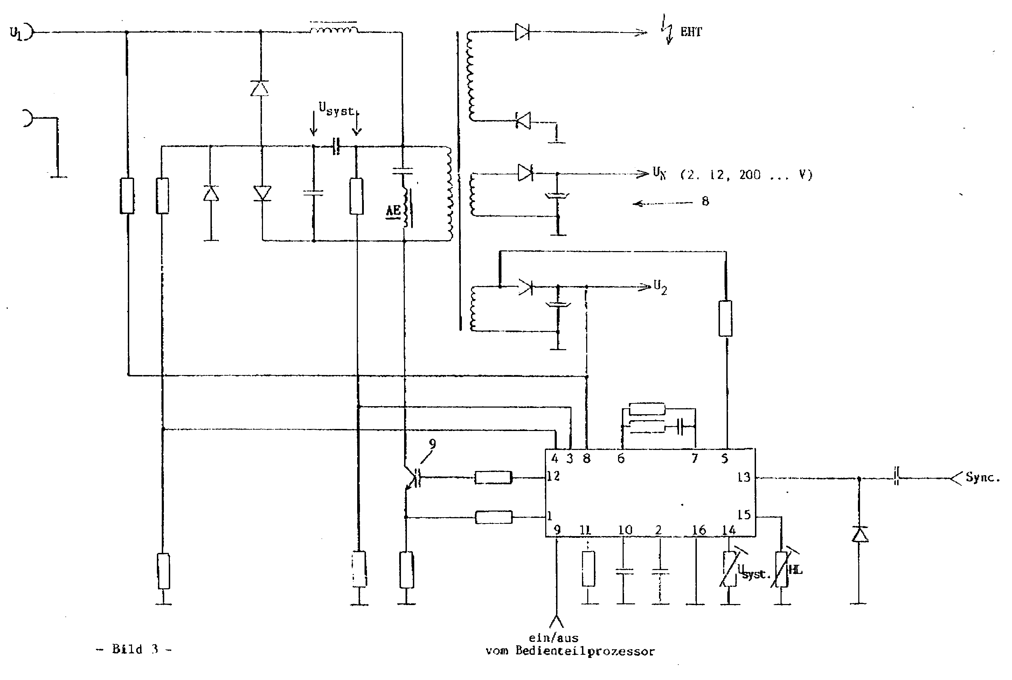

Eine bevorzugte Realisierung der Horizontalendstufe 8 für die Schaltung gemäß Bild 1 ist schematisch in Bild 3 dargestellt.

Die Horizontal- bzw. Zeilenendstufe gemäß Bild 3 ist hinsichtlich ihres prinzipiellen Aufbaus und ihres Funktionsprinzips in näheren Einzelheiten im Philips Report EJV 8502, S. R4 bis R7 u. R40 bis R42, beschrieben. Sie ist hinlaufgespeist. Ihre Versorgungsspanung ist so ausgelegt, daß sie nur um ihren Brummanteil über der Systemspannung liegt. Für diesen Fall kann, wie oben bereits erwähnt, die Speicherspule sehr klein ausgelegt werden, da sie nur diesen Brummanteil zwischenspeichern muß.

Die Horizontalendstufe 8 ist gemäß Bild 3 mit einem IGBT (insulated gate bipolar transistor) als Schalter 9 bestückt. Dieses moderne Bauelement eignet sich generell besonders gut als Schalter für selbstregelnde Horizontal- bzw. Zeilenendstufen, da es nur einer einfachen Ansteuerung bedarf und wegen der kurzen, vom Kollektorstrom unabhängigen Speicherzeit dieses Bauelements kein zweiter Phasenvergleich im Bildsichtgerät, z.B. Fernsehgerät, benötigt wird.

Die selbstregelnde Horizontal-Endstufe könnte abweichend von Bild 3 auch nach dem bekannten, in der DE-Z "Funkschau", Jg. 1977, S. 835 bis 840, beschriebenen Wessel-Konzept mit Rücklaufspeisung ausgelegt werden. Mit einer solchen Horizontalendstufe müßte jedoch die gesamte benötigte Energie und nicht nur der Brummanteil zwischengespeichert werden.

Die Schaltung gemäß Bild 1 - Bild 3 hat zusammengefaßt folgende Vorteile:
- Sie kommt, wie bisher allgemein üblich, mit zwei Leistungsstufen für die Stromversorgung und Zeilenablenkung aus, die hier aus dem aktiven Oberwellenfilter 2 und der selbstregelnden Horizontalendstufe 8 bestehen, hat jedoch zusätzlich die gewünschte sinusförmige Stromaufnahme.
- Die Lastschwankungen der Tonendstufen haben keine Rückwirkung auf das Bild, weil die Tonendstufen direkt aus dem aktiven Oberwellenfilter 2 versorgt werden.
- Es ist eine geringe Leistungsaufnahme im Stand-by-Betrieb gewährleistet.
- Für die Niedervolt-Schienen ist kein Längsregler erforderlich.
- Ohne Nachteile kann auf eine aufwendige Regelung der Schaltnetzteil(Oberwellenfilter)-Sekundärspannung U1 (Bild 1) mittels Übertragung eines Regelsignals von der Sekundärseite zur Primärseite der Netztrennstelle verzichtet werden, da Abweichungen der Sekundärspannung, die durch eine einfache primärseitige Regelung entstehen, von der selbstregelnden Horizontalendstufe mit ausgeregelt werden.
- Bei Verwendung eines IGBT in der Horizontalendstufe kann auf den zweiten Phasenvergleich verzichtet werden.

## Patentansprüche

1. Bildröhren-Sichtgerät, insbesondere Fernsehempfänger oder Monitor, mit einem einem Netz-Brückengleichrichter nachgeschalteten Schaltnetzteil für die Gleichstromversorgung des Geräts, **dadurch gekennzeichnet**, daß das Schaltnetzteil in für sich bekannter Weise als aktives Oberwellenfilter (2) mit Netztrennung und die direkt daran angeschlossene Horizontalendstufe (8) als für sich bekannte, selbstregelnde Horizontalendstufe ausgeführt sind, daß die Horizontalendstufe (8) so ausgelegt ist, daß sie die nicht völlig ausgeregelte Versorgungsspannung des Oberwellenfilters (2) auszuregeln vermag und die Gleichstromversorgung nicht brumm-empfindlicher Schaltungsteile (3,6,7) wie diejenigen der selbstregelnden Horizontalendstufe (8) direkt vom Ausgang des Oberwellenfilters (2) und die Gleichstromversorgung von brumm-empfindlichen Schaltungsteilen des Geräts ausgangsseitig von der Horizontalendstufe (8) abgeleitet ist.

2. Bildröhren-Sichtgerät nach Anspruch 1, **dadurch gekennzeichnet**, daß das aktive Oberwellenfilter (2) außer der Horizontalendstufe (8) die Audio-Endstufen (3) und/oder den IR-Empfänger (7) und/oder den Bedienteilprozessor (6) direkt mit Gleichstrom versorgt.

3. Bildröhren-Sichtgerät nach Anspruch 1, **dadurch gekennzeichnet**, daß die Horizontalendstufe (8) mittels eines vom Bedienteilprozessor (6) lieferbaren Ansteuersignals ein-bzw. ausschaltbar ist.

4. Bildröhren-Sichtgerät nach einem der vorhergehenden Ansprüche, **dadurch gekennzeichnet**, daß der Zeilenschalter (9) in der Horizontalendstufe und/oder der Schalter (9) des aktiven Oberwellenfilters (2) jeweils aus einem IGBT bestehen.

## Claims

1. Picture tube display device, in particular television receiver or monitor, with a switching mains unit, which is connected behind a mains bridge rectifier, for the direct current supply of the device, characterised thereby, that the switching mains unit is constructed in an in itself known manner as an active harmonic filter (2) with mains isolation and the line output stage (8) connected directly thereto, is constructed in an in itself known manner as a self-regulating line output stage, that the line output stage (8) is so designed that it is capable of regulating the not fully regulated supply voltage of the harmonic filter (2) and the direct current supply of circuit parts (3, 6, 7), which are not sensitive to hum, such as those of the self-regulating line output stage (8), are taken directly from the output of the harmonic filter (2) and the direct current supply of circuit parts of the device, which are sensitive to hum, are derived from the output of the line output stage (8).

2. Picture tube display device according to claim 1, characterised thereby, that the active harmonic filter (2), apart from the line output stage (8), supplies the audio output stages (3) and/or the infrared receiver (7) and/or the operating part processor (6) directly with direct current.

3. Picture tube display device according to claim 1, characterised thereby, that the line output stage (8) is switchable on or off by means of a drive control signal deliverable by the operating part processor (6).

4. Picture tube display device according to one of the preceding claims, characterised thereby, that the line switch (9) in the line output stage (8) and/or the switch (9) of the active harmonic filter (2) each consists of a respective insulated gate bipolar transistor.

## Revendications

1. Appareil de visualisation à tube image, notamment récepteur de télévision ou moniteur, comportant une alimentation à découpage branchée en aval d'un redresseur en pont du secteur, pour l'alimentation en courant continu de l'appareil, caractérisé par le fait que l'alimentation à découpage est réalisée d'une manière connue en soi sous la forme d'un filtre d'harmoniques actif (2) avec séparation par rapport au secteur et l'étage final horizontal (8), raccordé directement à ce filtre, est réalisé sous la forme d'un étage final horizontal à régulation automatique, connu en soi, que l'étage final horizontal (8) est agencé de telle sorte qu'il peut supprimer par réglage la tension d'alimentation, non complètement réglée, du filtre d'harmoniques (2) et que l'alimentation en courant continu d'éléments de circuit (3,6,7), qui ne sont pas sensibles au ronflement tels que ceux de l'étage final horizontal (8) à autorégulation, est dérivée directement de la sortie du filtre d'harmoniques (2), et l'alimentation en courant continu d'éléments de circuit de l'appareil, sensibles au ronflement, est dérivée, côté sortie, de l'étage final horizontal (8).

2. Appareil de visualisation à tube image suivant la revendication 1, caractérisé par le fait que le filtre actif d'harmoniques (2) alimente, outre l'étage final horizontal (8), les étages finals audio (3) et/ou le récepteur infrarouge (7) et/ou le processeur (6) de la partie de commande, directement en courant continu.

3. Appareil de visualisation à tube image suivant la revendication 1, caractérisé par le fait que l'étage final horizontal (8) peut être activé ou désactivé au moyen d'un signal de commande pouvant être délivré par le processeur (6) de la partie de commande.

4. Appareil de visualisation à tube image suivant l'une des revendications précédentes, caractérisé par le fait que le commutateur de lignes (9) situé dans l'étage final horizontal et/ou le commutateur (9) du filtre actif d'harmoniques (2) sont constitués chacun par un IGBT.
